(19) Europäisches Patentamt
European Patent Office
Office européen des brevets

(11) Publication number: **0 485 213 B1**

(12) **EUROPEAN PATENT SPECIFICATION**

(45) Date of publication of patent specification: **18.01.95**

(51) Int. Cl.$^6$: **C09D 5/16**, A01N 43/647, A01N 47/14

(21) Application number: **91310302.4**

(22) Date of filing: **07.11.91**

(54) **Aquatic antifouling compositions.**

(30) Priority: **09.11.90 JP 302701/90**

(43) Date of publication of application:
**13.05.92 Bulletin 92/20**

(45) Publication of the grant of the patent:
**18.01.95 Bulletin 95/03**

(84) Designated Contracting States:
**AT BE CH DE DK ES FR GB GR IT LI LU NL SE**

(56) References cited:
**EP-A-01 358 54**
**US-A-45 421 46**

**PATENT ABSTRACTS OF JAPAN, unexamined applications, C field, vol. 13, no. 3, page 153 C 557, January 6, 1989, THE PATENT OFFICE JAPANESE GOVERNMENT**

**DATABASE WPIL, no. 86-248 807, DERWENT PUBLICATION LTD., London, GB; & JP-A-61 176 671**

(73) Proprietor: **ROHM AND HAAS COMPANY**
**Independence Mall West**
**Philadelphia**
**Pennsylvania 19105 (US)**

(72) Inventor: **Ikari, Hirotake**
**2-1 Toshima 5-chome**
**Kita-ku,**
**Tokyo (JP)**
Inventor: **Takahashi, Teruyoshi**
**24-19 Araimachi,**
**Kawaguchi-City**
**Saitama Prefecture (JP)**

(74) Representative: **Smith, Julian Philip Howard et al**
**Rohm and Haas (UK) Limited,**
**European Operations Patent Dept.,**
**Lennig House,**
**2 Masons Avenue**
**Croydon CR9 3NB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention concerns an aquatic antifouling composition useful for reducing or preventing damage to ship hulls, fishnets such as nursery nets and stationary nets, and other marine structures, caused by marine organisms which adhere to underwater surfaces.

Ships, specifically their bottoms and waterline zones, fishnets such as nursery nets and stationary nets, and other marine structures are subject to adhesion of marine organisms such as barnacles, hydroides, ascidians, hard-shelled mussels and oysters, algae such as sea lettuce, green laver and marine-spirogyra, and various bacteria, moulds and diatoms called slime. Their adhesion can have a serious effect.

In the case of a ship, for example, a several percent increase in the resistance of the hull due to the adhesion of marine organisms causes a decrease in speed and reduction in fuel efficiency.

Stationary structures exposed to sea water, for example, structures for harbour facilities such as nautical beacons, floating beacons, mooring buoys, floating piers, floating breakwaters, and floating docks, pipelines, bridges, tanks, water pipes in power stations, seashore industrial plants, mooring ships, mooring and floating fishing structures, fish preserving structures, and stationary nets and other structures for fishing facilities, suffer various kinds of damage such as corrosion, sinking due to increased weight, and loss of balance, all caused by adhesion of marine organisms such as those described above.

At industrial facilities and power stations located along seashores which use sea water for cooling or for other purposes, marine organisms adhere to seawater inlets and outlets, and coastal structures such as channels and culverts. The volume occupied by the organisms at times reaches the order of some tens of percents of the internal volume of tubular structures, thus causing a decrease in the available cross-sectional area of waterways and an increase in the resistance to the liquid flow. Blockage of filter screens used to remove suspended solids is also a serious problem.

Fishnets such as nursery nets and stationary nets and marine ropes are subject to adhesion of organisms such as barnacles, hydroides, ascidians, green lavers and brown lavers. Great expense is required for removal of these organisms and repair or repainting of the structures.

Heretofore, the protection of marine structures from the adhesion of marine organisms ("biofouling") has been accomplished using sparingly soluble inorganic copper compounds, organic tin compounds, organic tin polymers, or organic nitrogen-sulphur compounds.

These compounds have various drawbacks however, including toxicity, pollution and in some cases failure to maintain sufficient effect when used for a long time as an aquatic antifoulant. For example, organic tin compounds are highly effective in preventing the adhesion of marine organisms, and they have been regarded as efficient antifouling components and widely used. Recently however, drawbacks of these organic tin compounds -- low rate of degradation, accumulation in living bodies, toxicological problems, risk of environmental pollution -- have been drawing attention.

Like organic tin compounds, dithiocarbamates which are organic sulphur compounds are also widely used as antifouling components. For example, Japanese Unexamined Patent Publication No. Sho 51-49227 discloses that biofouling is inhibited by coating fishnets with a composition obtained by combining manganese ethylenebisdithiocarbamate as an antifouling component with a carrier. Also, Japanese Unexamined Patent Publication No. Sho 51-51517 discloses an antifouling composition for fishnets comprising a heavy metal salt of ethylenebisdithiocarbamic acid, a cellulose resin and a carrier.

As antifouling agents organic tin compounds represented by tributyltin hydroxide, triphenyltin hydroxide and the like, tin-containing copolymers of such monomers as tributyltin (meth)acrylate, triphenyltin (meth)-acrylate, bis(tributyltin)fumarate and the like, and tin-containing copolymers comprising those monomers and vinyl monomers are considered most desirable in terms of retention of efficacy and stability of effect. However, their use is now very much undesirable because of their toxicity and pollution problems.

From an environmental point of view, metal salts of dithiocarbamic acid are generally regarded as being among the most desirable active components for antifouling agents. In many cases, however, retention of efficacy and stability are not satisfactory. In order to solve these problems, a heavy metal salt of an alkylenebisdithiocarbamic acid may be combined with an inorganic copper compound to provide an antifoulant component, and some other antifouling agents such as organic tin compounds may be added to the combination. Even this, however, is not always satisfactory.

JP 63-216805 discloses combinations of a triazole derivative and a dithiocarbamate for use as germicides. EP-A-135854 discloses combinations of triazole derivatives with one or more of a large number of compounds, amongst which are dithiocarbamates and also a copper salt complex. These compositions are used as fungicides.

The present invention provides an aquatic antifouling composition comprising at least one compound possessing a 1,2,4-triazole group represented by the formula:

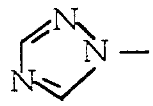

at least one insoluble dithiocarbamic acid derivative possessing a dithiocarbamyl group

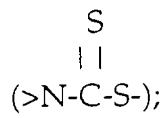

and one or more of basic copper carbonate, basic copper chloride, copper (II) chromate, copper (II) citrate, copper (II) ferrocyanate, copper (II) fluoride, copper (II) hydroxide, copper (II) quinoline, copper-8-hydroquinoline, copper (II) oleinate, copper (II) oxalate, copper (II) oxide, copper (II) tartrate, copper (II) tungstate, copper (I) bromide, copper (I) iodide, copper (I) oxide copper (I) sulfide, copper (I) sulphite, copper (I) thiocyanate, or copper naphthenate.

In a further aspect, the invention provides a method of preventing or inhibiting the growth of marine organisms on an underwater surface susceptible or subject thereto, comprising incorporating onto the surface an effective amount of a composition according to any preceding claim.

Another aspect of the invention comprises the use of a composition as defined above to prevent or inhibit the growth of marine organisms on underwater surfaces.

Preferred compounds possessing the 1,2,4-triazole group are:

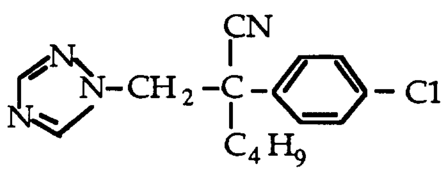

(1)

α-butyl-α-(4-chlorophenyl)-1H-1,2,4-triazole-1-propanenitrile

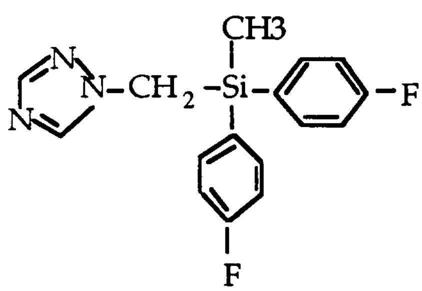

(2)

di (4-fluorophenyl)-(1,2,4-triazole-2-ylmethyl) methylsilane

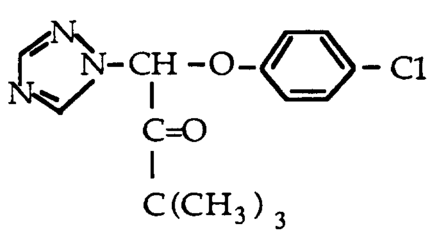

(3)

1-(4-chlorophenoxy)-3,3-dimethyl-1-(1H-1,2,4-triazolyl)-2-butanone

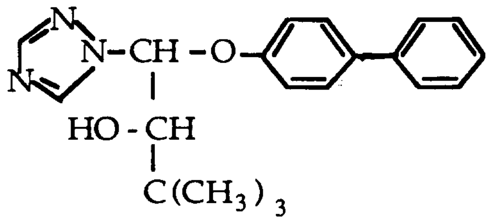

(4)

1-(biphenyl-4-oxy)-3,3-dimethyl-1-(1H-1,2,4-triazolyl)-2-butanol

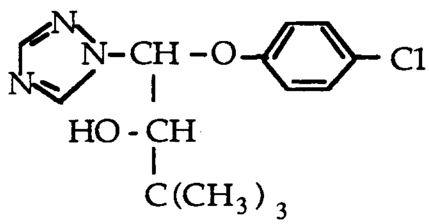

(5)

1-(4-chlorophenoxy)-3,3-dimethyl-1-(1H-1,2,4-triazolyl)-2-butanol

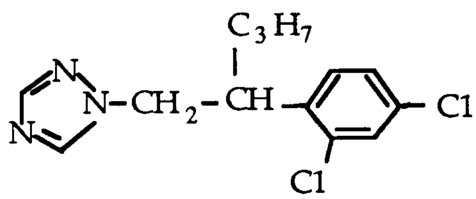

(6)

1-(2,4-dichloropropylphenethyl)-1H-1,2,4-triazole

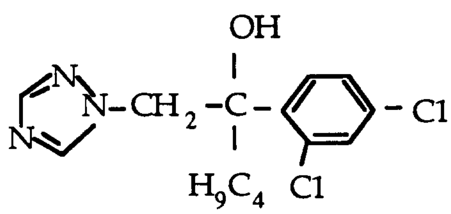

(7)

α-butyl-α-(2,4-dichlorophenyl)-1H-1,2,4-triazole-1-ethanol

It should be noted that the triazole compounds are not limited to those listed above.

Specific examples of the insoluble dithiocarbamic add derivative possessing the dithocarbamyl group

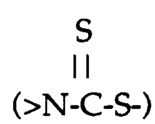

include: tetra lower alkylthiuram sulphide compounds, heavy metal salts of lower alkylene-bisdithiocarbamic acids, metal-complexed heavy metal salts of lower alkylenebisdithiocarbamic acids, heavy metal salts having lower alkylenebisdithiocarbamic acids bonded to monofunctional lower alkyldithiocarbamic acids through the medium of a heavy metal, and mixtures of the foregoing metal salts.

Examples of tetra lower alkylthiuram sulphide compounds are thiuram mono-or di-sulphides of tetra lower alkyl compounds such as tetramethyl, tetraethyl, tetrapropyl, tetraisopropyl and tetrabutyl compounds.

Examples of heavy metal salts of a lower alkylenebisdithiocarbamic acid are: divalent and higher heavy metal (zinc, manganese, copper, iron, and nickel) salts of ethylenebisdithiocarbamic acid, linear or branched propylenebisdithocarbamic acid, linear or branched butylenebisdithiocarbamic acid, N-substituted ethylenebisdithiocarbamic acid, N,N'-substituted ethylenebisdithiocarbamic acid, and N,N'-substituted butylenebisdithiocarbamic acid.

The heavy metal salts of metal-complexed lower alkylenebisdithiocarbamic acids are those which are obtained by coordinating other metal atoms in the aforementioned heavy metal salts of lower alkylenebisdithiocarbamic acids. Representative examples include zinc-complexed manganese ethylenebisdithiocarbamate.

Examples of the heavy metal salts of a monofunctional lower alkyldithiocarbamic acid are: divalent and higher heavy-metal (zinc, manganese, copper, iron, and nickel) salts of methyldithiocarbamic acid, dimethyldithiocarbamic acid, ethyldithiocarbamic add, diethyldithiocarbamic acid, propyldithiocarbamic acid, dipropyldithiocarbamic acid, butyldithiocarbamic acid, and dibutyldithiocarbamic acid.

Additionally, as examples of a further kind of dithiocarbamate type compound useful in the present invention are those metal salts which are formed by combining lower alkylenebisdithiocarbamic acids and monofunctional lower alkyldithiocarbamic acids through the medium of a heavy metal. They are produced by preparing mixed aqueous solutions of water-soluble salts of lower alkylenebisdithiocarbamic acids and water-soluble salts of monofunctional lower alkyldithiocarbamic acids and subjecting the mixed solutions to double decomposition with a water-soluble heavy metal salt. The most typical example of this dithiocarbamate type compound is the mixed salt, bisdimethyldithiocarbamoyl-zinc-ethylenebisdithiocarbamate obtained by combining ethylenebisdithiocarbamic acid and dimethyldithiocarbamic acid through the medium of zinc. Generally, the products of this combination contain zinc dimethyldithiocarbamate, a heavy metal salt of a monofunctional lower alkyldithiocarbamic acid, and zinc ethylenebisdithiocarbamate, a heavy metal salt of a lower alkylenebisdithiocarbamic acid. These products are generally referred to as "polycarbamate agents".

The dithiocarbamate type compounds of the present invention can be used in the form of physically mixed metal salts, or in the form of chemically mixed metal salts as described above.

Specific examples of the organic or inorganic copper compound which may also be employed in compositions according to the present invention, include basic copper carbonate, basic copper chloride, copper (II) chromate, copper (II) citrate, copper (II) ferrocyanate, copper (II) fluoride, copper (II) hydroxide, copper (II) quinoline, copper-8-hydroquinoline, copper (II) oleinate, copper (II) oxalate, copper (II) oxide, copper (II) tartrate, copper (II) tungstate, copper (I) bromide, copper (I) iodide, copper (I) oxide, copper (I) sulfide, copper (I) sulphite, copper (I) thiocyanate, and copper naphthenate. One or more kinds of these compounds may be used.

The proportion of the 1,2,4-triazole compound in the aquatic antifouling composition of the present invention is preferably 50 weight % or less, more preferably 45 to 0.1 weight %. The amount of the dithiocarbamic acid derivative(s) is preferably 60 weight % or less, more preferably 55 to 0.1 weight %. The amount of copper compound(s) is preferably 60 weight % or less, more preferably 50 to 1 weight %.

Proportions of active components greater than the above upper limits can lead to difficulties in coating. Proportions below the lower limits, however, may have insufficient antifouling activity.

The aquatic antifouling composition of the present invention may be used in combination with other additives such as organic or inorganic colouring pigments, conventional paints, extenders, suspending agents, anti-dripping agents, levelling agents, colour fixing agents and UV absorbents.

It is also possible to use the aquatic antifouling composition of this invention in combination with conventional antifoulants; for example, phthalimide type compounds such as trichlorophthalimide and the like, nitrile type compounds such as 2,4,5,6-tetrachloro-1,3-isophthalonitrile (Daconile) and the like, triazine type compounds such as 2-methylthio-4-t-butylamine-6-cyclopropylamino-S-triazine (Irgarol 1051) and the like, and 3-(3,4-dichlorophenyl)-1,1-dimethylurea (Zincpiridion) and the like.

The aquatic antifouling composition of this invention may also be used in combination with natural resins such as rosin or rosin ester, acryl type resins, alkyd type resins, epoxy type resins, vinyl type resins, vinyl chloride type resins and so forth.

Solvents which are useful for the aquatic antifouling composition of the invention include xylene, toluene, solvent naphtha, methyl isobutyl ketone, methyl ethyl ketone, cellosolve and the like.

The antifouling composition of the present invention provides excellent efficacy in preventing the adhesion to underwater structures of a wide variety of harmful organisms including barnacles, hydroids, ascidians, sea mussels and mussels; algae such as sea lettuce, green lavers, marine-spirogyras; and various bacteria, fungi, and diatoms collectively called "slime". The antifouling effect is maintained for a substantial period of time.

It has been known that dithiocarbamate compounds are highly effective in controlling bacteria and algae, but relatively ineffective against barnacles, hydroids, sea mussels, mussels and the like. The antifouling composition of the present invention, however, has antifouling effect against a wide variety of aquatic creatures, in addition to bacteria and algae.

The antifouling composition of the invention can be used in the same manner as conventional antifouling compositions. On ship-bottoms and marine structures, for example, it may be mixed with conventional coating materials or the like, and the mixture coated on the surface by conventional coating methods. Ropes and fishnets are dipped in the prepared antifouling composition, withdrawn from the composition, and then dried.

The antifouling composition of the invention has a particularly good antifouling effect when compared with conventional organic tin type antifouling compositions. However it has a very low toxicity and risk of pollution.

(Examples)

Testing Example 1

Test for Ship-bottom Antifouling Paints

Steel panels (300 x 100 x 2 mm) which had been given sandblast treatment were painted with Zinc Shop Primer once, with Vinyl Ship-bottom No.1 Paint three times, and finally with one of the newly prepared ship-bottom antifouling paints shown in Tables 1 and 2 below three times. Then, they were dried for three days.

The test panels thus obtained were hung on rafts which had been located at about 2 km offshore in Uragami Bay, Nachi Katsuura, Wakayama Prefecture, Japan. The panels were dipped in the sea 1.5 m below the surface. Then, the degree of adhesion of marine organisms was observed for 30 months.

For the evaluation of effect, the following scale based on the area of adhesion (%) was used. The test results are shown in Table 2.

| Scale | Area of Adhesion of marine organisms |
|---|---|
| 0 | No adhesion |
| 1 | 5% or less |
| 2 | 10% or less |
| 3 | 25% or less |
| 4 | 50% or less |
| 5 | more than 50% |

**Table 1**

| Examples | Concrete Example | | | | | | | | | | | | Comparative Example | | | | | | | | | | |
|---|---|---|---|---|---|---|---|---|---|---|---|---|---|---|---|---|---|---|---|---|---|---|---|
| Components | 1 | 2 | 3 | 4 | 5 | 6 | 7 | 8 | 9 | 10 | 11 | 12 | 1 | 2 | 3 | 4 | 5 | 6 | 7 | 8 | 9 | 10 | 11 |
| Compound possessing triazole group (mentioned in the text) | | | | | | | | | | | | | | | | | | | | | | | |
| Compound (1) | 5 | 5 | 5 | | | | | | | | | | 42 | | | | | | | | | | |
| Compound (2) | | | | 5 | 5 | 5 | | | | | | | | 42 | | | | | | | | | |
| Compound (3) | | | | | | | 5 | 5 | 5 | | | | | | 42 | | | | | | | | |
| Compound (4) | | | | | | | | | | 5 | 5 | 5 | | | | 42 | | | | | | | |
| Manganese salt of ethylene-bisdithiocarbamic acid | 7 | | | 7 | | | 7 | | | 7 | | | | | | | 40 | | | | | | |
| Manganese salt of zinc-complexed ethylene-bisdithiocarbamic acid | | 7 | | | 7 | | | 7 | | | 7 | | | | | | | 40 | | | | | |
| Bisdimethyldithio-carbamoyl zinc ethylenebisdithio- | | | 7 | | | 7 | | | 7 | | | 7 | | | | | | | 40 | | | | |
| Copper (I) oxide | 30 | | | 30 | | | 30 | | | 30 | | | | | | | | | | 40 | | | |
| Basic copper carbonate | | 30 | | | 30 | | | 30 | | | 30 | | | | | | | | | | 40 | | 40 |
| Copper terephthalate | | | 30 | | | 30 | | | 30 | | | 30 | | | | | | | | | | 40 | |

**Table 1 (cont'd)**

| Examples | Concrete Example | | | | | | | | | | | | Comparative Example | | | | | | | | | | |
|---|---|---|---|---|---|---|---|---|---|---|---|---|---|---|---|---|---|---|---|---|---|---|---|
| Components | 1 | 2 | 3 | 4 | 5 | 6 | 7 | 8 | 9 | 10 | 11 | 12 | 1 | 2 | 3 | 4 | 5 | 6 | 7 | 8 | 9 | 10 | 11 |
| Vinyl acetate-vinyl choride copolymer/VYHH | 6 | 6 | 6 | 6 | 6 | 6 | 6 | 6 | 6 | 6 | 6 | 6 | 6 | 6 | 6 | 6 | 6 | 6 | 6 | 6 | 6 | 6 | 6 |
| Rosin | 5 | 5 | 5 | 5 | 5 | 5 | 5 | 5 | 5 | 5 | 5 | 5 | 5 | 5 | 5 | 5 | 5 | 5 | 5 | 5 | 5 | 5 | 5 |
| Barium sulfate | 9 | 9 | 9 | 9 | 9 | 9 | 9 | 9 | 9 | 9 | 9 | 9 | 9 | 9 | 9 | 9 | 9 | 9 | 9 | 9 | 9 | 9 | 9 |
| Tricresyl phosphate | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| Iron oxide red | | | | | | | | | | | | | | | | | | | | | | | 3 |
| Organic bentonite | | | | | | | | | | | | | | | | | | | | | | | 1 |
| Anti-dripping agent | 2 | 2 | 2 | 2 | 2 | 2 | 2 | 2 | 2 | 2 | 2 | 2 | 2 | 2 | 2 | 2 | 4 | 4 | 4 | 4 | 4 | 4 | |
| Xylene | 15 | 15 | 15 | 15 | 15 | 15 | 15 | 15 | 15 | 15 | 15 | 15 | 15 | 15 | 15 | 15 | 15 | 15 | 15 | 15 | 15 | 15 | 16 |
| Methyl isobutyl ketone | 19 | 19 | 19 | 19 | 19 | 19 | 19 | 19 | 19 | 19 | 19 | 19 | 19 | 19 | 19 | 19 | 19 | 19 | 19 | 19 | 19 | 19 | |
| Tributyl tin methacrylate copolymer | | | | | | | | | | | | | | | | | | | | | | | 18 |

Table 2

| Evaluation of Area adhered by Marine Organisms | | | | | | |
|---|---|---|---|---|---|---|
| No. of Months passed | | 6 | 12 | 18 | 24 | 30 |
| Example | 1 | 0 | 0 | 0 | 0 | 1 |
| | 2 | 0 | 0 | 0 | 1 | 2 |
| | 3 | 0 | 0 | 0 | 1 | 2 |
| | 4 | 0 | 0 | 0 | 0 | 1 |
| | 5 | 0 | 0 | 0 | 1 | 2 |
| | 6 | 0 | 0 | 0 | 1 | 2 |
| | 7 | 0 | 0 | 0 | 0 | 1 |
| | 8 | 0 | 0 | 0 | 1 | 2 |
| | 9 | 0 | 0 | 0 | 1 | 2 |
| | 10 | 0 | 0 | 0 | 0 | 1 |
| | 11 | 0 | 0 | 0 | 1 | 2 |
| | 12 | 0 | 0 | 0 | 1 | 2 |
| Comparative Example | 1 | 0 | 0 | 1 | 2 | 2 |
| | 2 | 0 | 0 | 1 | 2 | 3 |
| | 3 | 0 | 1 | 2 | 2 | 3 |
| | 4 | 0 | 0 | 1 | 2 | 3 |
| | 5 | 0 | 1 | 2 | 3 | 3 |
| | 6 | 0 | 1 | 2 | 3 | 4 |
| | 7 | 0 | 1 | 2 | 3 | 4 |
| | 8 | 0 | 1 | 2 | 2 | 3 |
| | 9 | 0 | 1 | 2 | 3 | 4 |
| | 10 | 0 | 1 | 2 | 3 | 4 |
| | 11 | 0 | 0 | 1 | 1 | 2 |
| No Treatment | | 5 | 5 | - | - | - |

Testing Example 2

Test for Fishnet Antifoulants

Polyethylene knotless nets (5 knots 400 denier/70 pieces) were dipped in the fishnet antifoulants whose compositions are shown in Table 3. After natural drying, the nets were hung on rafts which had been located at about 2 km offshore in Uragami Bay, Katsuura, Wakayama Prefecture, Japan, and dipped in the sea 1.5 m below the surface. Then, the state of adhesion of marine organisms was observed for 6 months. The test results are shown in Table 4.

Scale for Evaluation

A: No adhesion of marine organisms.
B: Some adhesion is observed, but the net can stand continuous use.
C: Fairly large volume of adhesion and the net is unfit for continuous use.
D: Considerable volume of adhesion.

**Table 3**

(Unit: weight %)

| Examples / Components | Concrete Example 13 | Concrete Example 14 | Concrete Example 15 | Concrete Example 16 | Comparative Example 12 | Comparative Example 13 | Comparative Example 14 | Comparative Example 15 |
|---|---|---|---|---|---|---|---|---|
| Compound possessing 1,2,4-triazole group: | | | | | | | | |
| Compound (1) | 10 | 10 | | | 15 | | | |
| Compound (3) | | | 10 | 10 | | | | |
| Polycarbamate | 5 | | 5 | | | | | |
| Manganese salt of ethylenebisdithiocarbamic acid | | 5 | | 5 | | 15 | | |
| Basic copper chloride | | | | | | | 15 | |
| Acrylic resin | 15 | 15 | 15 | 15 | 15 | 15 | 15 | 15 |
| Xylene | 68 | 68 | 68 | 68 | 68 | 68 | 68 | 68 |
| Anti-dripping agent | 2 | 2 | 2 | 2 | 2 | 2 | 2 | 2 |
| Triphenyl tin fluoride | | | | | | | | 15 |

Table 4

| Evaluation of Area adhered by Marine Organisms | | | | | | | |
|---|---|---|---|---|---|---|---|
| No. of Months passed | | 1 | 2 | 3 | 4 | 5 | 6 |
| Example | 13 | A | A | A | A | B | B |
| | 14 | A | A | A | A | B | B |
| | 15 | A | A | A | A | B | B |
| | 16 | A | A | A | A | B | B |
| Comparative Example | 12 | A | B | B | B | C | C |
| | 13 | A | A | B | B | C | D |
| | 14 | A | A | B | C | C | D |
| | 15 | A | A | A | B | B | C |
| No Treatment | | D | D | - | - | - | - |

## Claims

1. An aquatic antifouling composition comprising at least one compound possessing a 1,2,4-triazole group represented by the formula:

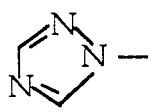

at least one insoluble dithiocarbamic acid derivative possessing a dithiocarbamyl group

S
||
(>N-C-S-);

and one or more of basic copper carbonate, basic copper chloride, copper (II) chromate, copper (II) citrate, copper (II) ferrocyanate, copper (II) fluoride, copper (II) hydroxide, copper (II) quinoline, copper-8-hydroquinoline, copper (II) oleinate, copper (II) oxalate, copper (II) oxide, copper (II) tartrate, copper (II) tungstate, copper (I) bromide, copper (I) iodide, copper (I) oxide copper (I) sulfide, copper (I) sulphite, copper (I) thiocyanate, or copper naphthenate.

2. Composition according to claim 1 wherein the triazole compound is α-butyl-α-(4-chlorophenyl)-1H-1,2,4-triazole-1-propane, di(4-fluorophenyl)-(1,2,4-triazole-2-ylmethyl) methylsilane, 1-(4-chlorophenoxy)-3,3-dimethyl-1-(1H-1,2,4-triazolyl)-2-butanone, 1-(biphenyl-4-oxy)-3,3-dimethyl-1-(1H-1,2,4-triazolyl)-2-butanol, 1-(4-chlorophenoxy)-3,3-dimethyl-1-(1H-1,2,4-triazolyl)-2-butanol, 1-(2,4-dichloropropyl phenethyl)-1 H-1,2,4-triazole, or α-butyl-α-(2,4-dichlorophenyl)-1H-1,2,4-triazole-1-ethanol.

3. Composition according to claim 1 or 2 wherein said insoluble dithiocarbamic acid derivative is a tetra lower alkylthiuram sulphide, a heavy metal salt of an optionally metal-complexed lower alkylene-bisdithiocarbamic acid, a heavy metal salt of a monofunctional lower alkyldithiocarbamic acid, or a heavy metal salt having a lower alkylene bisdithiocarbamic acid bonded to a monofunctional lower alkyldithiocarbamic acid through a heavy metal.

4. Composition according to claim 3 wherein said heavy metal salt of a lower alkylene bisdithiocarbamic acid is a divalent or higher heavy metal (zinc, manganese, copper, iron, and nickel) salt of ethylenebisdithiocarbamic acid, linear or branched propylenebisdithocarbamic acid, linear or branched butylenebisdithiocarbamic acid, N-substituted ethylene-bisdithiocarbamic acid, N, N'-substituted ethylenebisdithiocarbamic acid, or N,N'-substituted butylenebisdithiocarbamic acid.

**5.** Composition according to claim 3 wherein the heavy metal salt of a metal-complexed lower alkylene-bisdithiocarbamic acid is zinc-or-copper-complexed manganese ethylene bisdithiocarbamate.

**6.** Composition according to claim 3 wherein said heavy metal salt of a monofunctional lower alkyldithiocarbamic acid is a divalent or higher heavy-metal (zinc, manganese, copper, iron, and nickel) salt of methyldithiocarbamic acid, dimethyldithiocarbamic acid, ethyldithiocarbamic acid, diethyldithiocarbamic acid, propyldithiocarbamic acid, dipropyldithiocarbamic acid, butyldithiocarbamic acid, and dibutyldithiocarbamic acid.

**7.** Composition according to claim 3 wherein said heavy metal salt having a lower alkylene bisdithiocarbamic acid bonded to a monofunctional lower alkyldithiocarbamic acid through a heavy metal is bisdimethyldiothiocarbamoyl-zinc-ethylenebisdithiocarbamate.

**8.** Composition according to any of claims 3 to 7 wherein the tetra lower alkylthiuram sulphide is a mono- or disulphide of tetramethyl, tetraethyl, tetrapropyl, tetraisopropyl or tetrabutyl compound.

**9.** Composition according to any preceding claim wherein the triazole compound is present in an amount of up to 50%, preferably 0.1 to 45% by weight; the dithiocarbamic acid derivative is present in an amount of up to 60%, preferably 0.1 to 55% by weight; and the copper compound, if present, is in an amount of up to 60%, preferably 1 to 50% by weight.

**10.** Method of preventing or inhibiting the growth of marine organisms on an underwater surface susceptible or subject thereto, comprising incorporating onto the surface an effective amount of a composition according to any preceding claim.

**11.** Use of a composition according to any of claims 1 to 9 to prevent or inhibit the growth of marine organisms on underwater surfaces.

**Patentansprüche**

**1.** Anwuchsverhindernde Unterwasseranstrichfarbzusammensetzung, enthaltend mindestens eine Verbindung mit einer 1,2,4-Triazolgruppe der folgenden Formel

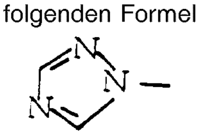 ,

mindestens ein unlösliches Dithiocarbamidsäurederivat mit einer Dithiocarbamylgruppe

S
||
(>N-C-S-)

und eines oder mehrere von basischem Kupfercarbonat, basischem Kupferchlorid, Kupfer(II)chromat, Kupfer(II)citrat, Kupfer(II)ferrocyanat, Kupfer(II)fluorid, Kupfer(II)hydroxid, Kupfer(II)chinolin, Kupfer-8-hydrochinolin, Kupfer(II)oleinat, Kupfer(II)oxalat, Kupfer(II)oxid, Kupfer(II)tartrat, Kupfer(II)wolframat, Kupfer(I)bromid, Kupfer(I)iodid, Kupfer(I)oxid, Kupfer(I)sulfid, Kupfer(I)sulphit, Kupfer(I)thiocyanat oder Kupfernaphthenat.

**2.** Zusammensetzung nach Anspruch 1,
**dadurch gekennzeichnet**,
daß die Triazolverbindung α-Butyl-α-(4-chlorphenyl)-1H-1,2,4-triazol-1-propan, di(4-Fluorphenyl)-(1,2,4-triazol-2-ylmethyl)methylsilan, 1-(4-Chlorphenoxy)-3,3-dimethyl-1-(1H-1,2,4-triazolyl)-2-butanon,1-(Biphenyl-4-oxy)-3,3-dimethyl-1-(1H-1,2,4-triazolyl)-2-butanol, 1-(4-Chlorphenoxy)-3,3-dimethyl-1-(1H-1,2,4-triazolyl)-2-butanol,1-(2,4-Dichlorpropylphenethyl)-1-H-1,2,4-triazol oder α-Butyl-α-(2,4-dichlorphenyl)-1H-1,2,4-triazol-1-ethanol ist.

**3.** Zusammensetzung nach Anspruch 1 oder 2,
**dadurch gekennzeichnet**,
daß das unlösliche Dithiocarbamidsäurederivat ein Tetraniederes Alkylthiuramsulphid, ein Schwermetallsalz einer gegebenenfalls als Metallkomplex vorliegenden niederen Alkylen-bisdithiocarbamidsäure, ein Schwermetallsalz einer einwertigen niederen Alkyldithiocarbamidsäure oder ein Schwermetallsalz ist, bei dem eine niedere Alkylen-bisdithiocarbamidsäure an eine einwertige niedere Alkyl-dithiocarbamidsäure durch ein Schwermetall gebunden ist.

**4.** Zusammensetzung nach Anspruch 3,
**dadurch gekennzeichnet**,
daß das Schwermetallsalz einer niederen Alkylen-bisdithiocarbamidsäure ein zweiwertiges oder höherwertiges Schwermetallsalz (Zink, Mangan, Kupfer, Eisen und Nickel) von Ethylen-bisdithiocarbamidsäure, eine lineare oder verzweigte Propylen-bisdithiocarbamidsäure, eine lineare oder verzweigte Butylen-bisdithiocarbamidsäure, N-substituierte Ethylen-bisdithiocarbamidsäure, N,N'-substituierte Ethylen-bisdithiocarbamidsäure oder N,N'-substituierte Butylen-bisdithiocarbamidsäure ist.

**5.** Zusammensetzung nach Anspruch 3,
**dadurch gekennzeichnet**,
daß das Schwermetallsalz eines Metallkomplexes einer niederen Alkylen-bisdithiocarbamidsäure ein Zinkkomplex oder Kupferkomplex von Mangan-ethylen-bisdithiocarbamat ist.

**6.** Zusammensetzung nach Anspruch 3,
**dadurch gekennzeichnet**,
daß das Schwermetallsalz einer einwertigen niederen Alkyl-dithiocarbamidsäure ein zweiwertiges oder höherwertiges Schwermetallsalz (Zink, Mangan, Kupfer, Eisen und Nickel) von Methyl-dithiocarbamidsäure, Dimethyl-dithiocarbamidsäure, Ethyl-dithiocarbamidsäure, Diethyl-dithiocarbamidsäure, Propyl-dithiocarbamidsäure, Dipropyl-dithiocarbamidsäure, Butyl-dithiocarbamidsäure und Dibutyl-dithiocarbamidsäure ist.

**7.** Zusammensetzung nach Anspruch 3,
**dadurch gekennzeichnet**,
daß das Schwermetallsalz, bei dem eine niedere Alkylen-bisdithiocarbamidsäure durch ein Schwermetall an eine einwertige niedere Alkyl-dithiocarbamidsäure gebunden ist, Bisdimethyl-dithiocarbamoyl-Zink-Ethylen-bisdithiocarbamat ist.

**8.** Zusammensetzung nach einem der Ansprüche 3-7,
**dadurch gekennzeichnet**,
daß das Tetra-niedere Alkylthiuramsulphid ein Mono- oder Disulphid einer Tetramethyl-, Tetraethyl-, Tetrapropyl-, Tetraisopropyl- oder Tetrabutylverbindung ist.

**9.** Zusammensetzung nach einem der vorstehenden Ansprüche,
**dadurch gekennzeichnet**,
daß die Triazolverbindung in einer Menge von bis zu 50 Gew.-%, vorzugsweise 0,1 bis 45 Gew.-%, vorhanden ist, das Dithiocarbamidsäurederivat in einer Menge von bis zu 60 Gew.-% vorhanden ist, vorzugsweise von 0,1 bis 55 Gew.-%, und die gegebenenfalls vorhandene Kupferverbindung in einer Menge von bis zu 60 Gew.-%, vorzugsweise 1 bis 50 Gew.-%, vorhanden ist.

**10.** Verfahren zum Verhindern oder Hemmen des Wachstums von Meeresorganismen auf einer unter Wasser liegenden Oberfläche, die demgegenüber empfindlich oder damit verunreinigt ist, durch Aufbringen auf die Oberfläche einer wirksamen Menge einer Zusammensetzung nach einem der vorstehenden Ansprüche.

**11.** Verwendung einer Zusammensetzung nach einem der Ansprüche 1 bis 9 zum Verhindern oder Hemmen des Wachstums von Meeresorganismen auf unter Wasser liegenden Oberflächen.

## Revendications

1. Une composition aquatique antisalissure comprenant au moins un composé possédant un groupe 1,2,4-triazole représenté par la formule:

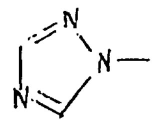

au moins un dérivé d'acide dithiocarbamique insoluble possédant un groupe dithiocarbamyle

$$(>N-\overset{\overset{\displaystyle S}{\|}}{C}-S-)$$

et un ou plusieurs des carbonate de cuivre basique, chlorure de cuivre basique, chromate de cuivre (II), citrate de cuivre(II), ferrocyanate de cuivre(II), fluorure de cuivre (II), hydroxyde de cuivre(II), cuivre(II)-quinoléine, cuivre 8-hydroxyquinoléine, oléate de cuivre (II), oxalate de cuivre(II), oxyde de cuivre(II), tartrate de cuivre(II), tungstate de cuivre(II), bromure de cuivre(I), iodure de cuivre(I), oxyde de cuivre(I), sulfure de cuivre(I), sulfite de cuivre(I), thiocyanate de cuivre(I) ou naphténate de cuivre.

2. Composition selon la revendication 1 dans laquelle le composé triazolique est l'α-butyl-α-(4-chlorophényl)-1H-1,2,4-triazole-1-propane, le di(4-fluorophényl)-(1,2,4-triazole-2-ylméthyl)méthylsilane, la 1-(4-chloro-phénoxy)-3,3-diméthyl-1-(1H-1,2,4-triazolyl)-2-butanone le 1-(biphényl-4-oxy)-3,3-diméthyl-1-(1H-1,2,4-triazolyl)-2-butanol, le 1-(4-chlorophénoxy)-3,3-diméthyl-1-(1H-1,2,4-triazolyl)-2-butanol, le 1-(2,4-dichloropropyl phénéthyl) -1 H-1,2,4-triazole ou l'α-butyl-α-(2,4-dichlorophényl) -1H-1,2,4-triazole-1-éthanol.

3. Composition selon la revendication 1 ou 2 dans laquelle ledit dérivé d'acide dithiocarbamique insoluble est un sulfure de tétraalkyl inférieur thiurame, un sel de métal lourd d'un acide alkylène inférieur bisdithiocarbamique facultativeent complexé avec un métal, un sel de métal lourd d'un acide alkyl inférieur dithiocarbamique monofonctionnel ou un sel de métal lourd comportant un acide alkylène inférieur bisdithiocarbamique lié à un acide alkyl inférieur dithiocarbamique monofonctionnel par l'intermédiaire d'un métal lourd.

4. Composition selon la revendication 3 dans laquelle ledit sel de métal lourd d'un acide alkylène inférieur bisdithiocarbamique est un sel de métal lourd divalent ou supérieur (zinc, manganèse, cuivre, fer et nickel) d'acide éthylènebisdithiocarbamique d'acide propylènebisdithiocarbamique linéaire ou ramifié, d'acide butylènebisdithiocarbamique linéaire ou ramifié, d'acide éthylènebisdithiocarbamique N-substitué, d'acide éthylènebisdithiocarbamique N,N'-substitué ou d'acide butylènebisdithiocarbamique N,N'-substitué.

5. Composition selon la revendication 3 dans laquelle le sel de métal lourd d'un acide alkylène inférieur bisdithiocarbamique complexé par un métal est de l'éthylènebisdithiocarbamate de manganèse complexé par du zinc ou du cuivre.

6. Composition selon la revendication 3 dans laquelle ledit sel de métal lourd d'un acide alkyl inférieur dithiocarbamique monofonctionnel est un sel de métal lourd divalent ou supérieur (zinc, manganèse, cuivre, fer et nickel) d'acide méthyldithiocarbamique, d'acide diméthyldithiocarbamique, d'acide éthyldithiocarbamique, d'acide diéthyldithiocarbamique, d'acide propyldithiocarbamique, d'acide dipropyldithiocarbamique, d'acide butyldithiocarbamique et d'acide dibutyldithiocarbamique.

7. Composition selon la revendication 3 dans laquelle ledit sel de métal lourd comportant un acide alkylène inférieur bisdithiocarbamique lié à un acide alkyl inférieur dithiocarbamique monofonctionnel par l'intermédiaire d'un métal lourd est l'éthylènebisdithiocarbamate de bisdiméthyldithiocarbamoylzinc.

**8.** Composition selon l'une des revendications 3 à 7 dans laquelle le sulfure de tétraalkyl inférieur thiurame est un mono- ou disulfure de composé tétraméthyle, tétraéthyle, tétrapropyle, tétraisopropyle ou tétrabutyle.

**9.** Composition selon l'une des revendications précédentes dans laquelle le composé triazolique est présent en une quantité jusqu'à 50%, de préférence de 0,1 à 45% en poids, le dérivé d'acide dithiocarbamique est présent en une quantité jusqu'à 60%, de préférence de 0,1 à 55% en poids et le composé de cuivre est présent, s'il y a lieu, en une quantité jusqu'à 60%, de préférence de 1 à 50% en poids.

**10.** Procédé de prévention ou d'inhibition de la croissance d'organismes marins sur une surface immergée dans de l'eau de mer, sensible ou exposée à ceux-ci, consistant à incorporer dans la surface une quantité efficace d'une composition selon l'une des revendications précédentes.

**11.** Utilisation d'une composition selon l'une des revendications 1 à 9 pour empêcher ou inhiber la croissance d'organismes marins sur des surfaces immergées dans de l'eau de mer.